Europäisches Patentamt

European Patent Office

Office européen des brevets

(19)

(11) **EP 0 929 774 B1**

(12) **FASCICULE DE BREVET EUROPEEN**

(45) Date de publication et mention
de la délivrance du brevet:
**02.01.2003 Bulletin 2003/01**

(51) Int Cl.⁷: **B60Q 1/14**, F21V 17/02,
F21V 14/04

(21) Numéro de dépôt: **98941572.4**

(22) Date de dépôt: **07.08.1998**

(86) Numéro de dépôt international:
**PCT/FR98/01774**

(87) Numéro de publication internationale:
**WO 99/008041 (18.02.1999 Gazette 1999/07)**

(54) **PROJECTEUR A FAISCEAU VARIABLE POUR VEHICULES**

SCHEINWERFER MIT VERÄNDERBARER LICHTVERTEILUNG, INSBESONDERE FÜR
FAHRZEUGE

HEADLIGHT WITH VARIABLE BEAM FOR MOTOR VEHICLES

(84) Etats contractants désignés:
**DE ES GB IT**

(30) Priorité: **11.08.1997 FR 9710308**

(43) Date de publication de la demande:
**21.07.1999 Bulletin 1999/29**

(73) Titulaire: **VALEO VISION**
**93000 Bobigny (FR)**

(72) Inventeur: **ALBOU, Pierre**
**F-73013 Paris (FR)**

(74) Mandataire: **Lemaire, Marc et al**
**Valeo Management Services,**
**Sce Propriété Industrielle**
**2, rue André Boulle**
**B.P. 150**
**94004 Créteil (FR)**

(56) Documents cités:
**WO-A-96/27102**      **US-A- 4 831 506**
**US-A- 5 060 120**

**Description**

La présente invention se rapporte aux projecteurs à faisceau variable pour véhicules.

Elle concerne plus particulièrement les projecteurs qui sont capables de générer, à l'aide d'une seule source de lumière, des faisceaux de type route de distributions lumineuses différentes.

Des projecteurs de ce type ont déjà été proposés, notamment dans la demande de brevet français publiée sous le FR-A-2 727 497. L'intérêt principal de tels projecteurs est que la distribution lumineuse qu'ils génèrent est adaptée aux conditions de conduite du véhicule. En général, la distribution lumineuse varie avec la vitesse du véhicule, afin d'éclairer les régions proches du véhicule à basse vitesse (faisceau large) et de privilégier l'éclairement de la route, le plus loin possible, à haute vitesse (faisceau pointu).

Un objet de la présente invention est de fournir un projecteur du type précité avec de bonnes performances optiques et un fonctionnement robuste.

Dans ce but, l'invention propose un projecteur, notamment pour véhicule, comportant un premier réflecteur généralement concave, une lampe montée fixe dans le premier réflecteur et portant une source de lumière, et un second réflecteur reçu dans la concavité du premier réflecteur, caractérisé en ce que le second réflecteur est mobile sous l'action d'un dispositif d'entraînement entre une position extrême dans laquelle le projecteur génère selon un axe optique un faisceau large et une position extrême dans laquelle le projecteur génère selon l'axe optique un faisceau pointu.

Selon des modes de réalisation de l'invention:

- le premier réflecteur possède au moins une zone de portée qui reçoit de la lumière de la source de lumière lorsque le second réflecteur est dans l'une des positions extrêmes, et qui est masquée par le second réflecteur lorsque celui-ci est dans l'autre position extrême ;
- le second réflecteur génère un faisceau large dans l'une des positions extrêmes et un faisceau pointu dans l'autre position extrême ;
- le premier réflecteur possède une zone de fond qui reçoit de la lumière de la source de lumière quelle que soit la position du second réflecteur, et qui réfléchit la lumière en un faisceau large ;
- le second réflecteur est mobile entre une position extrême avancée, dans laquelle il génère un faisceau pointu, et une position extrême reculée, dans laquelle il génère un faisceau large et masque au moins une zone de portée du second réflecteur ;
- le second réflecteur est monté sur un support en forme de tige qui traverse une ouverture du premier réflecteur et qui est relié à un dispositif d'entraînement ;
- le second réflecteur est réalisé en deux parties réunies par le support ;
- l'éclairement selon l'axe optique en faisceau pointu est supérieur à l'éclairement selon l'axe optique en faisceau large et l'éclairement à 10° d'azimut en faisceau pointu est inférieur à l'éclairement à 10° d'azimut en faisceau large ;
- l'éclairement selon l'axe optique en faisceau pointu est supérieur à l'éclairement selon l'axe optique en faisceau large et l'éclairement à 15° d'azimut en faisceau pointu est inférieur à l'éclairement à 15° d'azimut en faisceau large.

L'invention va à présent être décrite en référence aux dessins annexés dans lesquels :

- les figures 1 et 2 représentent un projecteur selon l'invention en coupe suivant un plan vertical,
- les figures 3 et 4 représentent une partie du projecteur selon l'invention en section horizontale,
- la figure 5 représente les réflecteurs et la lampe du projecteur selon l'invention, en vue de face,
- la figure 6 représente l'éclairement généré par le projecteur dans deux positions du second réflecteur en fonction de l'azimut,

Le projecteur réalisé conformément aux enseignements de l'invention est référencé 10 dans son ensemble dans les dessins annexés.

Il comporte un boîtier 12 fermé à l'avant par une glace transparente 14. Le boîtier 12 reçoit un premier réflecteur 16 de forme générale concave, la concavité étant tournée vers la glace 14 et définissant ainsi un axe optique (direction générale de sortie de la lumière). Dans sa région la plus éloignée de la glace 14, le premier réflecteur 16 reçoit une lampe 18 qui porte une source de lumière 20. Le boîtier possède dans sa paroi arrière une ouverture d'accès à la lampe 18 pour son remplacement ; en fonctionnement, cette ouverture est fermée par un capot 13.

Le projecteur 10 comporte en outre un second réflecteur 32 reçu dans la concavité du premier réflecteur 16, au voisinage de la lampe 18. Ce second réflecteur 32 est de taille nettement inférieure au premier réflecteur 16. Il est de forme généralement concave et globalement centrée sur l'axe optique. Les concavités respectives du premier réflecteur 16 et du second réflecteur 32 sont tournées globalement dans la même direction (qui correspond à l'axe optique du projecteur).

Le second réflecteur 32 est monté fixe sur un support, ici une tige 30. Le support 30 est quant à lui mobile en translation suivant l'axe optique par rapport au premier réflecteur 16. Le second réflecteur 32 est ainsi mobile en translation dans le premier réflecteur 16.

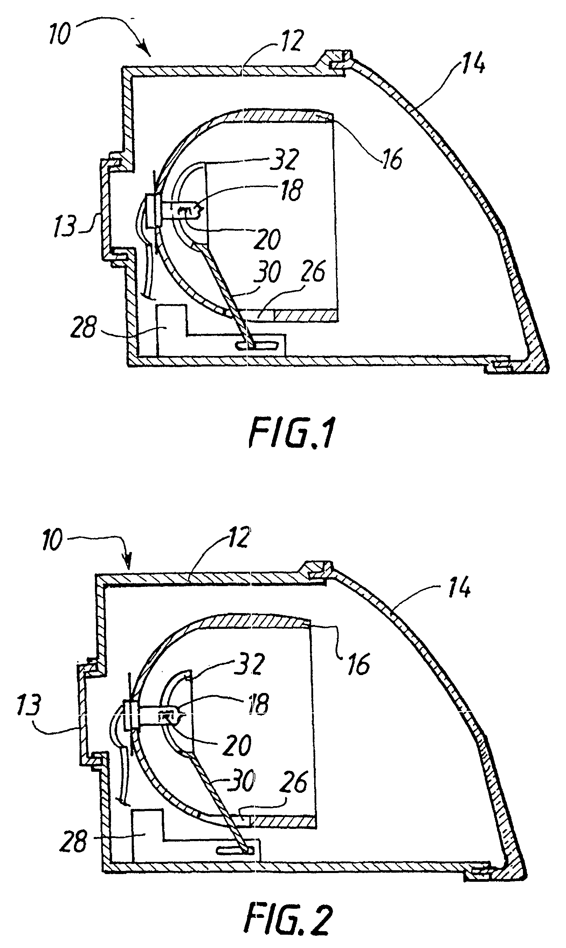

Dans le mode de réalisation représenté aux figures 1 et 2, le support en forme de tige 30 est fixé à l'une des ses extrémités au second réflecteur 32 et s'étend dans un plan vertical à travers une ouverture 26 formée dans le premier réflecteur 16. L'autre extrémité de la tige 30 est guidé en translation dans un dispositif d'entraînement 28. Le dispositif d'entraînement 28 peut par exemple comporter un moteur électrique et un système de transformation du mouvement rotatif en mouvement d'entraînement de la tige 30 en translation.

Le dispositif d'entraînement est commandé par un circuit électronique en fonction de la vitesse du véhicule.

L'ensemble constitué par le premier réflecteur 16, le second réflecteur 32, le support 30 et le dispositif d'entraînement 28 peut être monté sur une platine, elle-même montée dans le boîtier 12 par des moyens connus qui permettent le réglage du projecteur 10 en site et en azimut.

Le second réflecteur 32 est mobile entre deux positions extrêmes : une position dite reculée, la plus en arrière sur l'axe optique et la plus proche de la zone de fixation de la lampe 18 sur le premier réflecteur 16 ; et une position dite avancée, la plus en avant sur l'axe optique, c'est-à-dire la plus proche de la glace 14.

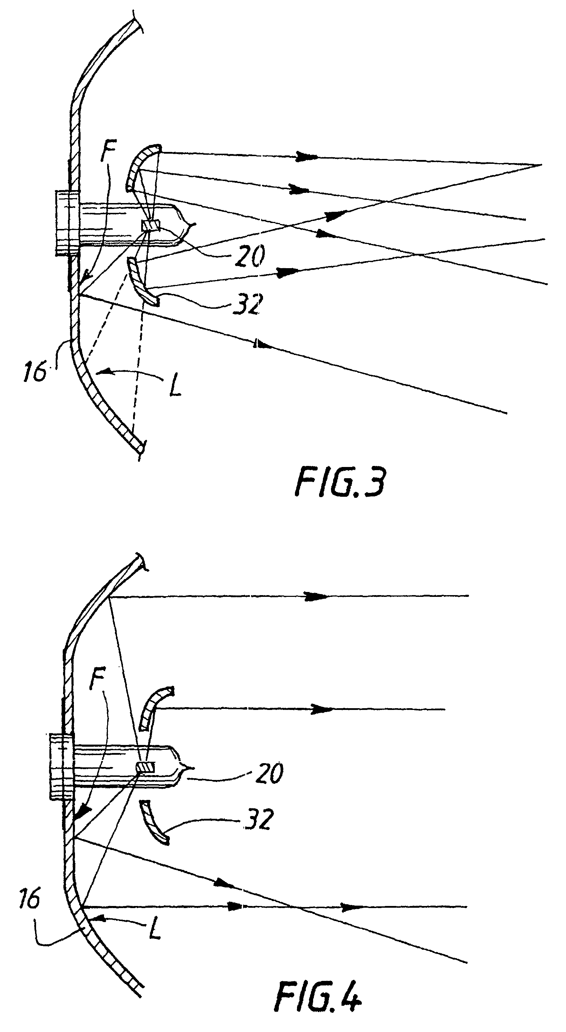

Dans la position reculée du second réflecteur 32 représentée aux figures 1 et 3, le projecteur génère un faisceau large, particulièrement adapté à une conduite sur route sinueuse ou à vitesse faible. Cette position du second réflecteur 32 sera donc utilisée lorsque le véhicule circule à basse vitesse.

Dans la position avancée du second réflecteur 32 représentée au figures 2 et 4, le projecteur génère un faisceau pointu, particulièrement adapté à une conduite sur route droite à grande vitesse. Cette position du second réflecteur 32 sera donc utilisée lorsque le véhicule circule à haute vitesse.

Par ailleurs, le second réflecteur 32 peut être disposé de manière continue sur l'ensemble des positions intermédiaires entre les deux positions extrêmes précités, par exemple selon une fonction monotone de la vitesse.

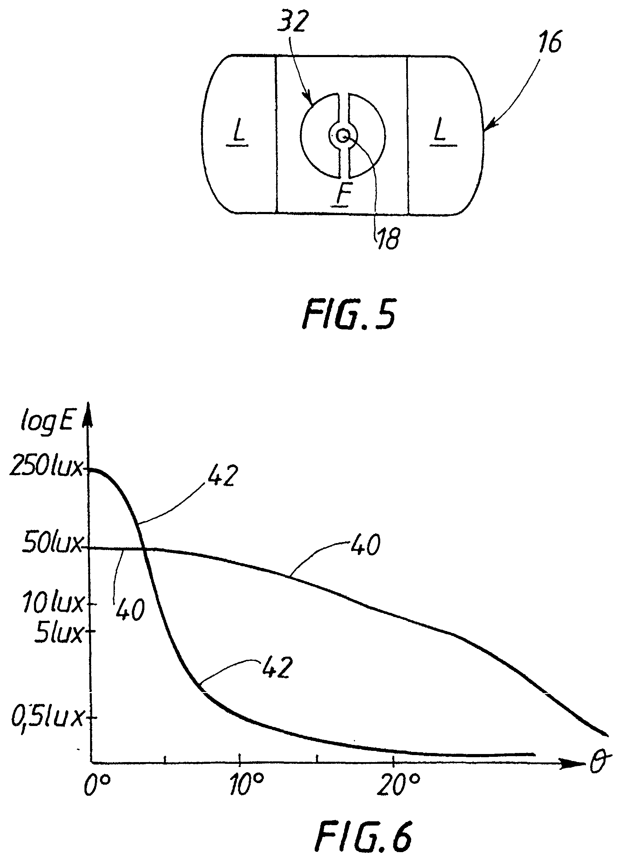

La figure 6 représente l'éclairement généré par le projecteur en faisceau large (courbe référencée 40) et en faisceau pointu (courbe référencée 42) en fonction de l'écart angulaire θ (angle d'azimut) par rapport à l'axe optique, dans le plan horizontal contenant l'axe optique. L'éclairement est mesuré en lux sur un écran placé à 25 mètres et représenté en échelle logarithmique.

L'éclairement à 25 mètres dans l'axe est par exemple de 250 lux en faisceau pointu alors qu'il est de 50 lux en faisceau large.

Pour un écart de 10° avec l'axe optique (angle d'azimut), l'éclairement à 25 mètres sera inférieur à 2 lux en faisceau pointu alors qu'il sera supérieur à 10 lux en faisceau large.

On voit donc que, lors du passage de faisceau pointu à faisceau large, l'éclairement dans l'axe diminue alors que l'éclairement à 10° (angle d'azimut) augmente ; l'éclairement à 15° augmente également lors du passage de faisceau pointu à faisceau large.

Afin de générer les faisceaux mentionnés ci-dessus, les premiers et seconds réflecteurs sont construits comme décrit ci-dessous.

Le premier réflecteur 16 comporte une zone de fond F et au moins une zone latérale L, comme bien visible sur la figure 5. Le premier réflecteur 16 représenté dans les dessins annexés possède précisément deux zones latérales L.

L'image de la source de lumière 20 générée par la zone de fond F est un faisceau angulairement large. La surface de la zone de fond F générant un tel étalement angulaire est par exemple du type décrit dans la demande de brevet publiée sous le n° 2 722 270. Pour définir la surface de fond, on pourra donc se baser sur cette demande de brevet en considérant le second réflecteur 32 dans sa position reculée. Les rayons réfléchis par la zone de fond F seront alors aussi peu interceptés par le second réflecteur 32 dans les autres positions de celui-ci. Ainsi la zone de fond F réfléchit la lumière en un faisceau large qui est peu intercepté par le second réflecteur 32.

D'autre part, les rayons issus de la source de lumière 20 atteignent la zone de fond F sans jamais être interceptés par le second réflecteur 32, quelle que soit la position de celui-ci. Cette caractéristique permet d'ailleurs de définir l'étendue de la zone de fond F.

Les zones latérales L génèrent un faisceau très peu étalé angulairement (faisceau pointu). On peut considérer que l'étalement angulaire d'un faisceau pointu est inférieur à 10° de part et d'autre de l'axe optique. Ces zones latérales L constituent donc des zones de portée. Une surface optique parabolique dont le foyer est situé sur la source de lumière conviendra donc dans les zones latérales L.

Avantageusement, les zones latérales de portée L sont inactives dans la position reculée du second réflecteur 32. Pour ce faire, dans sa position reculée, le second réflecteur 32 est situé entre la source de lumière 20 et les zones latérales L du premier réflecteur 16. Ainsi, dans sa position reculée, le second réflecteur 32 masque les zones de portée (zones latérales) et récupère le flux lumineux qui était dirigé vers ces zones de portée (voir figure 3).

Dans le mode de réalisation représenté sur les figures annexées, le second réflecteur 32 est réalisé en deux parties réunies par le support 30 et placées chacune d'un côté de la lampe 18 à l'horizontale de celle-ci.

La surface optique définie par le second réflecteur 32 est telle qu'elle réfléchit un faisceau large dans la position reculée du second réflecteur 32 (figure 3) et un faisceau pointu dans la position avancée.

Plus précisément, et comme cela apparaît clairement sur la figure 3, lorsque le second réflecteur 32 est en position reculée, les rayons réfléchis par ses régions proches de la lampe 18 en section horizontale sont fortement divergents par rapport à l'axe optique alors que rayons réfléchis par ses régions périphériques sont quasiment parallèles à l'axe optique. On réalise ainsi un faisceau large.

Dans la position avancée du second réflecteur 32, tous les rayons réfléchis par le second réflecteur 32 sont sensiblement parallèles à l'axe optique.

La surface donnée ci-dessous à titre d'exemple a les propriétés optiques requises. Cette surface va être explicitée dans un repère orthonormé direct (O,x,y,z). L'origine O de ce repère est située au centre de la source de lumière 20 ; (O,y) est l'axe optique du projecteur et (O,z) est vertical. Les deux positions extrêmes du second réflecteur 32 sont repérées sur (O,y) par y1 et y2 (y1 < y2).

On choisit un paramètre $d_{max}$ et une fonction d : [y1, y2]→[-$d_{max}$, 0] décroissante qui permettent d'adapter la répartition de la lumière dans le faisceau.

On détermine alors (par exemple par des méthodes numériques classiques) sur [y1,y2] la fonction ρ telle que :

$$\frac{d\rho}{dy}(y).\left\{\frac{\rho(y)}{\sqrt{y^2+\rho^2(y)}}-\sin[d(y)]\right\}=\cos[d(y)]-\frac{y}{\sqrt{y^2+\rho^2(y)}} \ .$$

La condition aux limites à imposer pour déterminer complétement la fonction ρ détermine le rayon ρ0 du trou de fond du second réflecteur 32 et s'écrit ρ0 = ρ(y1).

Il est souvent souhaitable que le faisceau n'ait pas une symétrie de révolution, mais soit plus large dans son extension horizontale. On choisit alors une direction $\vec{i}$ orthogonale à l'axe optique dans laquelle on aura un étalement $y_F$ ou une contraction F1.

Pour tout θ compris entre 0 et 2π, on définit :

$$M(y,\theta)=\begin{pmatrix} \rho(y).\cos(\theta) \\ y \\ \rho(y).\cos(\theta) \end{pmatrix}$$

et

$$\vec{F}(y,\theta)=\begin{pmatrix} \sin[d(y)].\cos(\theta) \\ \cos[d(y)] \\ \sin[d(y)].\sin(\theta) \end{pmatrix} \ .$$

On pose en outre

$$\vec{C}=\begin{pmatrix} 0 \\ y_F - F1 \\ 0 \end{pmatrix} \ .$$

Si, pour chaque y et pour chaque θ, le point $F_{22}(y,\theta)$ est la solution de l'équation suivante :

$$\begin{cases} O\overset{\rho}{F_{22}} \bullet \overset{\rho}{y} = y_F \\ O\overset{\rho}{F_{22}} \bullet (\overset{\rho}{A} \wedge \overset{\rho}{P}) = \overset{\rho}{C} \bullet (\overset{\rho}{A} \wedge \overset{\rho}{P}) \\ O\overset{\rho}{F_{22}} \bullet [\overset{\rho}{P} \wedge (\overset{\rho}{A} \wedge \overset{\rho}{y})] = O\overset{\rho}{M} \bullet [\overset{\rho}{P} \wedge (\overset{\rho}{A} \wedge \overset{\rho}{y})] \end{cases}$$

et si $F_{21}(y,\theta)$ est le point tel que :

$$M\overset{\rho}{F_{21}} = (M\overset{\rho}{F_{22}} \bullet \overset{\rho}{P}).\overset{\rho}{P} \ ,$$

alors la surface du second réflecteur 32 est définie par les points M' tels que :

$$O\overset{\rho}{M'} = \lambda.O\overset{\rho}{M}$$

avec

$$l = OM + MF_{21}$$

et

$$\lambda = \frac{1}{2} \cdot \frac{l^2 - OF_{22}^2}{OM.l - O\overset{\rho}{F_{22}} \bullet O\overset{\rho}{M}} \ .$$

On remarquera l'interaction particulièrement avantageuse du premier réflecteur 16 et du second réflecteur 32.

En effet, lorsque le second réflecteur 32 est en position avancée (figure 4), il récupère une faible partie de la lumière qu'il réfléchit sensiblement parallèlement à l'axe optique. La zone de fond F du premier réflecteur 16 génère un fond lumineux (faisceau large homogène). Une grande partie de la lumière est récupérée par les zones latérales de portée L qui la renvoie parallèlement à l'axe optique. On réalise ainsi un faisceau pointu particulièrement satisfaisant.

À l'inverse, lorsque le second réflecteur 32 est en position reculée (figure 3), une partie importante du flux lumineux est interceptée par le second réflecteur 32 qui génère dans cette position un faisceau large. Les zones latérales de portée L sont masquées par le second réflecteur 32 et ne participent donc pas à la formation du faisceau. Sur le premier réflecteur 16, seule est optiquement active la zone de fond F qui génère un faisceau large. On réalise ainsi un faisceau large homogène.

L'invention ne se limite pas à l'exemple qui précède qui ne constitue qu'un mode de réalisation préféré de celle-ci.

**Revendications**

1. Projecteur (10) pour véhicule, comportant un premier réflecteur (16) généralement concave, une lampe (18) montée fixe dans le premier réflecteur (16) et portant une source de lumière (20), et un second réflecteur (32) reçu dans la concavité du premier réflecteur (16),
   **caractérisé en ce que** le second réflecteur (32) est mobile sous l'action d'un dispositif d'entraînement (28) entre une position extrême dans laquelle le projecteur (10) génère selon un axe optique un faisceau large (40) et une position extrême dans laquelle le projecteur (10) génère selon l'axe optique un faisceau pointu (42).

2. Projecteur (10) selon la revendication 1, **caractérisé en ce que** le premier réflecteur (16) possède au moins une zone de portée (L) qui reçoit de la lumière de la source de lumière (20) lorsque le second réflecteur (32) est dans l'une des positions extrêmes, et qui est masquée par le second réflecteur (32) lorsque celui-ci est dans l'autre position extrême.

**3.** Projecteur (10) selon l'une des revendications 1 à 2, **caractérisé en ce que** le second réflecteur (32) génère un faisceau large dans l'une des positions extrêmes et un faisceau pointu dans l'autre position extrême.

**4.** Projecteur (10) selon l'une des revendications 1 à 4, **caractérisé en ce que** le premier réflecteur (16) possède une zone de fond (F) qui reçoit de la lumière de la source de lumière (20) quelle que soit la position du second réflecteur (32), et qui réfléchit la lumière en un faisceau large qui n'est pas intercepté par le second réflecteur (32).

**5.** Projecteur (10) selon l'une des revendications 1 à 4, **caractérisé en ce que** le second réflecteur (32) est mobile entre une position extrême avancée, dans laquelle il génère un faisceau pointu, et une position extrême reculée, dans laquelle il génère un faisceau large et masque au moins une zone de portée (L) du second réflecteur (16).

**6.** Projecteur (10) selon l'une des revendications 1 à 5, **caractérisé en ce que** le second réflecteur (32) est monté sur un support (30) en forme de tige qui traverse une ouverture (26) du premier réflecteur (16) et qui est relié au dispositif d'entraînement (28).

**7.** Projecteur (10) selon la revendication 6, **caractérisé en ce que** le second réflecteur (32) est réalisé en deux parties réunies par le support (30).

**8.** Projecteur (10) selon l'une des revendications 1 à 7, **caractérisé en ce que** l'éclairement selon l'axe optique en faisceau pointu (42) est supérieur à l'éclairement selon l'axe optique en faisceau large (40)
et **en ce que** l'éclairement à 10° d'azimut en faisceau pointu (42) est inférieur à l'éclairement à 10° d'azimut en faisceau large (40).

**9.** Projecteur (10) selon l'une des revendications 1 à 7, **caractérisé en ce que** l'éclairement selon l'axe optique en faisceau pointu (42) est supérieur à l'éclairement selon l'axe optique en faisceau large (40)
et **en ce que** l'éclairement à 15° d'azimut en faisceau pointu (42) est inférieur à l'éclairemen à 15° d'azimut en faisceau large (40).

**Patentansprüche**

**1.** Fahrzeugscheinwerfer (10) mit einem ersten allgemein konkaven Reflektor (16), einer Lampe (18), die in dem ersten Reflektor (16) feststehend angebracht ist und eine Lichtquelle (20) trägt, und einem zweiten Reflektor (32), der in der konkaven Krümmung des ersten Reflektors (16) aufgenommen ist,
**dadurch gekennzeichnet, daß** der zweite Reflektor (32) unter der Einwirkung einer Antriebsvorrichtung (28) zwischen einer Endstellung, in der der Scheinwerfer (10) ein breites Lichtbündel (40) entlang einer optischen Achse erzeugt, und einer Endstellung, in der der Scheinwerfer (10) ein spitzes Lichtbündel (42) entlang der optischen Achse erzeugt, beweglich ist.

**2.** Scheinwerfer (10) nach Anspruch 1,
**dadurch gekennzeichnet, daß** der erste Reflektor (16) wenigstens einen Reichweitenbereich (L) besitzt, der von der Lichtquelle (20) beleuchtet wird, wenn sich der zweite Reflektor (32) in der einen der Endstellungen befindet, und der durch den zweiten Reflektor (32) verdeckt wird, wenn dieser sich in der anderen Endstellung befindet.

**3.** Scheinwerfer (10) nach einem der Ansprüche 1 bis 2,
**dadurch gekennzeichnet, daß** der zweite Reflektor (32) in der einen der Endstellungen ein breites Lichtbündel und in der anderen Endstellung ein spitzes Lichtbündel erzeugt.

**4.** Scheinwerfer (10) nach einem der Ansprüche 1 bis 3,
**dadurch gekennzeichnet, daß** der erste Reflektor (16) einen Bodenbereich (F) besitzt, der ungeachtet der Stellung des zweiten Reflektors (32) von der Lichtquelle (20) beleuchtet wird und der das Licht als breites Lichtbündel reflektiert, das nicht durch den zweiten Reflektor (32) abgeschirmt wird.

**5.** Scheinwerfer (10) nach einem der Ansprüche 1 bis 4,
**dadurch gekennzeichnet, daß** der zweite Reflektor (32) zwischen einer nach vorne versetzten Endstellung, in der er ein spitzes Lichtbündel erzeugt, und einer nach hinten versetzten Endstellung, in der er ein breites Lichtbündel erzeugt und wenigstens einen Reichweitenbereich (L) des ersten Reflektors (16) verdeckt, beweglich ist.

**6.** Scheinwerfer (10) nach einem der Ansprüche 1 bis 5,
**dadurch gekennzeichnet, daß** der zweite Reflektor (32) an einem stangenförmigen Träger (30) angebracht ist, der eine Öffnung (26) des ersten Reflektors (16) durchquert und mit der Antriebsvorrichtung (28) verbunden ist.

**7.** Scheinwerfer (10) nach Anspruch 6,
**dadurch gekennzeichnet, daß** der zweite Reflektor (32) in zwei Teilen ausgeführt ist, die durch den Träger (30) miteinander verbunden sind.

**8.** Scheinwerfer (10) nach einem der Ansprüche 1 bis 7,
**dadurch gekennzeichnet, daß** die Beleuchtung in der optischen Achse mit spitzem Lichtbündel (42) stärker ist als die Beleuchtung in der optischen Achse mit breitem Lichtbündel (40), und daß die Beleuchtung bei einem Azimutwinkel von 10° mit spitzem Lichtbündel (42) geringer ist als die Beleuchtung bei einem Azimutwinkel von 10° mit breitem Lichtbündel (40).

**9.** Scheinwerfer (10) nach einem der Ansprüche 1 bis 7,
**dadurch gekennzeichnet, daß** die Beleuchtung in der optischen Achse mit spitzem Lichtbündel (42) stärker ist als die Beleuchtung in der optischen Achse mit breitem Lichtbündel (40), und daß die Beleuchtung bei einem Azimutwinkel von 15° mit spitzem Lichtbündel (42) geringer ist als die Beleuchtung bei einem Azimutwinkel von 15° mit breitem Lichtbündel (40).

**Claims**

**1.** A headlight (10) for a vehicle, comprising a generally concave first reflector (16), a lamp (18) fixed in the first reflector (16) and carrying a light source (20), and a second reflector (32) received in the concavity of the first reflector (16),
**characterised in that** the second reflector (32) is movable by an actuating device (28) between an end position in which the headlight (10) generates a wide beam (40) along an optical axis, and an end position in which the headlight (10) generates a sharp beam (42).

**2.** A headlight according to Claim 1, **characterised in that** the first reflector (16) has at least one reflecting zone (L) which receives light from the light source (20) when the second reflector (32) is in one of its end positions, and which is masked by the second reflector (32) when the latter is in the other end position.

**3.** A headlight (10) according to Claim 1 or Claim 2, **characterised in that** the second reflector (32) generates a wide beam in one of the end positions and a sharp beam in the other end position.

**4.** A headlight according to one of Claims 1 to 3, **characterised in that** the first reflector (16) has a base zone (F) which receives light from the light source (20) regardless of the position of the second reflector (32), and which reflects the light in a wide beam which is not intercepted by the second reflector (32).

**5.** A headlight (10) according to one of Claims 1 to 4, **characterised in that** the second reflector (32) is movable between an advanced end position in which it generates a sharp beam, and a retracted end position in which it generates a wide beam and masks at least one reflective zone (L) of the second reflector (16).

**6.** A headlight (10) according to one of Claims 1 to 5, **characterised in that** the second reflector (32) is mounted on a support (30) on the form of a rod which extends through an aperture (26) in the first reflector (16) and which is coupled to the actuating device (28).

**7.** A headlight (10) according to Claim 6, **characterised in that** the second reflector (32) is made in two parts, joined together by the support (30).

**8.** A headlight (10) according to one of Claims 1 to 7, **characterised in that** the illumination given along the optical axis in sharp beam mode (42) is greater than the illumination given along the optical axis in wide beam mode (40).

**9.** A headlight (10) according to one of Claims 1 to 7, **characterised in that** the illumination along the optical axis in sharp beam mode (42) is greater than the illumination along the optical axis in wide beam mode (40), and **in that** the illumination at 15 degrees of azimuth in sharp beam mode (42) is less than the illumination at 15 degrees of azimuth in wide beam mode (40).

FIG.1

FIG.2

9

F

20

32

16

L

FIG.3

F

20

32

16

L

FIG.4

FIG.5

FIG.6